# FASCICULE DE BREVET EUROPEEN

(11) **EP 2 803 541 B1**
(45) Date de publication et mention de la délivrance du brevet: **21.08.2019**
(21) Numéro de dépôt: 14167073.7
(22) Date de dépôt: 05.05.2014
(51) Int. Cl.: B60S 1/38, B60S 1/40, B60S 1/52

(54) **Dispositif de fixation d'essuie-glace et système d'essuyage comprenant ledit dispositif de fixation.**
Befestigungsvorrichtung eines Scheibenwischers, und Scheibenwischsystem, das diese Befestigungsvorrichtung umfasst
Device for attaching a windscreen wiper and wiper system including said attachment device

(30) Priorité: 13.05.2013 FR 1354279
(43) Date de publication de la demande: 19.11.2014
(73) Titulaire: Valeo Systèmes d'Essuyage, 78322 Le Mesnil Saint Denis (FR)
(72) Inventeur: Izabel, Vincent, 91380 CHILLY MAZARIN (FR)
(74) Mandataire: Callu-Danseux, Violaine

(56) Documents cités:
- DE-U1-202010 017 467
- FR-A1- 2 968 256
- FR-A1- 2 981 622
- US-A1- 2006 059 647

## Description

Le domaine de la présente invention est celui des équipements pour les véhicules, et plus particulièrement celui des équipements pour l'essuyage du pare-brise des automobiles.

Les automobiles sont couramment équipées de systèmes d'essuie-glace pour dégager le pare-brise de ce qui pourrait bloquer la vision des passagers du véhicule, en particulier de son conducteur. Ces essuie-glaces comprennent classiquement un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "flat blade" (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est attaché au bras de l'essuie-glace par un dispositif de fixation constitué d'un connecteur et d'un adaptateur. Le connecteur est une pièce qui est sertie directement sur le balai alors que l'adaptateur est une pièce intermédiaire qui permet la fixation du connecteur sur le bras de l'essuie-glace. Ces deux pièces sont reliées l'une à l'autre par un axe transversal d'articulation qui autorise leur rotation relative, dans un plan perpendiculaire au pare-brise passant par le bras.

Le blocage de l'adaptateur dans le bras est assuré actuellement par un pion de blocage qui vient se loger dans une lumière du bras. Ce pion de blocage appartient à l'adaptateur et est situé en extrémité d'une languette flexible.

Le document FR 2 981 622 décrit un tel dispositif de fixation. FR-A-2968256 montre le préambule de la revendication 1.

Il est intéressant de prévoir un blocage de l'adaptateur dans le bras dont la fiabilité soit améliorée.

A cet effet, l'invention a pour objet un dispositif de fixation d'un balai d'essuie-glace sur un bras d'entrainement d'un système d'essuyage, ledit dispositif comprenant une pièce terminale de bras, un connecteur destiné à être fixé au balai, un adaptateur de raccordement du connecteur audit bras, et une pièce intermédiaire, ledit adaptateur comprenant des moyens de maintien sur le bras en une position nominale de blocage, ladite pièce intermédiaire étant mobile dans ladite pièce terminale par rapport à l'adaptateur, et comprenant des moyens de désengagement et/ou de verrouillage desdits moyens de maintien, de manière à autoriser un montage et/ou un démontage de l'adaptateur sur le bras et/ou de manière à retenir l'adaptateur sur le bras en position nominale de blocage, dans lequel les moyens de désengagement sont configurés pour agir sur les moyens de maintien de manière à les escamoter lors du montage et/ou du démontage de l'adaptateur sur le bras.

Autrement dit, un déplacement de ladite pièce intermédiaire dans le bras est apte à autoriser le désengagement desdits moyens de maintien. L'utilisation d'une pièce dédiée permet de fiabiliser le maintien de l'adaptateur dans le bras.

Selon différents modes de réalisation de l'invention, qui pourront être pris ensemble ou séparément :
- ledit adaptateur est lié au connecteur avec un degré de liberté en pivotement autour d'un premier axe de rotation,
- ledit adaptateur et ladite pièce intermédiaire sont deux éléments distincts.
- ledit adaptateur est configuré pour être monté sur le bras selon une direction, dite de montage/démontage, située dans un plan perpendiculaire audit premier axe de rotation,
- ladite pièce intermédiaire est mobile en translation dans le bras selon ladite direction de montage/démontage,
- ladite pièce intermédiaire, dite alors levier, est mobile en rotation autour d'un deuxième axe de rotation,
- ledit deuxième axe de rotation appartient à la pièce terminale et est parallèle au premier axe de rotation,
- les moyens de maintien comprennent au moins une butée escamotable selon une direction, dite d'escamotage,
- ladite direction d'escamotage comprend une composante parallèle audit axe de rotation,
- les moyens de désengagement comprennent au moins une came agissant sur la ou les butées de manière à les entrainer dans ladite direction d'escamotage,
- les moyens de maintien comprennent au moins un ergot escamotable selon ladite direction d'escamotage,
- lesdits ergots sont aptes à venir se loger en position nominale de blocage à l'intérieur d'une ou de lumières réalisées dans le bras,
- les moyens de verrouillage comprennent au moins une partie en saillie venue de matière avec un corps du levier,
- la ou lesdites parties en saillie définissent une butée apte à empêcher l'escamotage du ou desdits ergots en position nominale de blocage,
- la ou lesdits ergots et/ou la ou lesdites lumières sont configurés pour permettre l'escamotage du ou desdits ergots en dehors de la ou desdites lumières,
- la ou les butées et/ou le ou les ergots sont situés sur une patte issue de matière avec l'adaptateur,
- la ou desdites pattes de l'adaptateur sont configurées pour fléchir de manière à autoriser l'escamotage du ou desdits ergots,
- la ou les cames agissent sur la ou les butées de manière à faire sortir le ou les ergots de la ou des lumières du bras,
- la ou les cames entrainent le fléchissement de la ou desdites pattes de l'adaptateur,
- lesdites lumières sont débouchantes,
- lesdits ergots et lesdites lumières présentent des tailles respectives empêchant une manipulation desdits ergots,
- ladite pièce intermédiaire est accessible en position nominale ainsi que lors du démontage et lors du montage de l'adaptateur sur le bras.

Selon un aspect de l'invention qui pourra être utilisé avec tout ou partie des caractéristiques précédentes, ledit dispositif comprend un ensemble muni de la pièce terminale du bras d'entrainement, dit aussi porte-balai, d'une interface de connexion et de ladite pièce intermédiaire, dite cavalier, ledit ensemble étant apte à occuper une position de travail dans laquelle ladite interface est libre par rapport à ladite pièce terminale et une position dite de service dans laquelle ladite interface est retenue de manière orientée à l'intérieur de ladite pièce terminale par ledit cavalier.

Au moins une partie dudit cavalier est configurée de sorte à pouvoir être manipulé pour passer de la position de travail à la position de service.

Ledit ensemble comporte en outre au moins un premier ergot situé sur l'un des éléments parmi ledit cavalier et ladite interface, et au moins un logement, situé sur l'autre élément, le ou lesdits premiers ergots étant aptes à venir se loger dans le ou lesdits logements en position de service.

Ledit cavalier comporte avantageusement des formes aptes à guider le ou lesdits premiers ergots vers le ou lesdits logements.

Selon différents modes de réalisation de cet aspect de l'invention, qui pourront être pris ensemble ou séparément :
- le ou lesdits logements sont situés sur ledit cavalier et définissent une première butée,
- le ou lesdits premiers ergots sont cylindriques,
- les formes aptes à guider le ou lesdits premiers ergots vers le ou lesdits logements sont des pentes de guidage,
- lesdites pentes de guidage forment un, ou des entonnoirs,
- ledit cavalier comporte au moins une deuxième butée apte à empêcher ladite interface de pivoter par rapport audit cavalier,
- la ou lesdites deuxièmes butées sont configurées pour prendre appui sur ladite interface, en position de service, à distance du ou desdits premiers ergots,
- ladite interface présente des moyens aptes à la bloquer sur un connecteur dit mécanique fixé audit balai d'essuyage, en position de travail,
- lesdits moyens sont des seconds ergots, différents du ou des premiers ergots,
- lesdits seconds ergots sont cylindriques et aptes à être retenus par des contre-formes, lesdites contre-formes étant au moins en partie cylindriques et appartenant audit connecteur mécanique,
- ledit cavalier comprend un bouton permettant de le faire passer de ladite position de travail à ladite position de service, ledit bouton étant mobile le long d'une fente située sur ladite pièce terminale et orientée selon ladite direction de montage et/ou démontage de l'adaptateur dans ladite pièce terminale,
- ladite fente est située sur une face de ladite pièce terminale destinée à être située à l'opposé du balai.

Selon une variante, ledit dispositif comprend un ensemble muni de la pièce terminale du bras d'entrainement, dit aussi porte-balai, d'une interface de connexion et dudit levier, ledit ensemble étant apte à occuper une position de travail dans laquelle ladite interface est libre par rapport à ladite pièce terminale et une position dite de service dans laquelle ladite interface est retenue de manière orientée à l'intérieur de ladite pièce terminale par ledit levier.

Au moins une partie dudit levier est configurée de sorte à pouvoir être manipulé pour passer de la position de travail à la position de service.

Ledit ensemble comporte en outre au moins un premier ergot situé sur l'un des éléments parmi ledit levier et ladite interface, et au moins un logement, situé sur l'autre élément, le ou lesdits premiers ergots étant aptes à venir se loger dans le ou lesdits logements en position de service.

Selon différents modes de réalisation de cet aspect de l'invention, qui pourront être pris ensemble ou séparément :
- ledit ensemble comporte au moins un premier téton situé sur l'un des éléments parmi ledit levier et ladite interface, et au moins un logement, situé sur l'autre élément, le ou lesdits logements étant apte à retenir le ou lesdits premiers tétons en position de service,
- le ou lesdits premiers tétons sont cylindriques,
- le ou lesdits logements sont situés sur ledit levier,
- le ou lesdits logements sont mobiles en rotation,
- le ou lesdits logements définissent une première butée,
- le ou lesdits logements sont des crochets,
- lesdits crochets sont, au moins en partie, cylindriques,
- lesdits crochets sont ouverts et venus de matière avec ledit levier,
- ledit levier et/ou ledit porte-balai définissent une deuxième butée apte à empêcher ladite interface de pivoter à l'intérieur de ladite pièce terminale en position de service,
- ladite interface présente une géométrie extérieure apte à coopérer avec ladite deuxième butée,
- ledit levier comprend un manche permettant de le faire passer de ladite position de travail à ladite position de service,
- ledit manche couvre au moins une partie dudit porte-balai,
- ledit manche est situé sur une face dudit porte-balai, destiné à être à l'opposé du balai,
- ledit levier est configuré de telle sorte que le manche adopte, en position de travail, une position parallèle à la direction longitudinale du porte-balai,
- ledit levier est configuré de telle sorte que le manche adopte, en position de service, une position orthogonale à la direction longitudinale du porte-balai,
- la pièce terminale comprend une fenêtre pour le passage dudit levier,
- ledit ensemble comprend une pièce supplémentaire solidaire de la pièce terminale qui est configurée pour permettre une articulation entre ledit levier et ladite pièce terminale,
- la partie en saillie des moyens de verrouillage est venue de matière avec un corps du levier comprenant lesdits crochets,
- la ou lesdites parties en saillie définissent une troisième butée apte à empêcher l'escamotage du ou desdits ergots en position de travail,
- la ou lesdites parties en saillie sont situées au niveau des crochets,
- le ou lesdits ergots et/ou la ou lesdites lumières sont configurés pour permettre l'escamotage du ou desdits ergots en position de service.

Les opérations de montage sont ainsi plus intuitives car elles font appel à une pièce, à savoir le cavalier ou le levier, visible extérieurement.

En outre, grâce au guidage de l'interface par rapport au cavalier ou au levier, le risque de fausse manoeuvre est diminué et le montage d'un balai de rechange est facilité, en particulier quant à la connexion de l'interface au balai.

L'opérateur peut, de la sorte, manoeuvrer le cavalier ou le levier pour amener le balai de la position de service à la position de travail, un raccordement hydraulique et/ou électrique fiable étant ainsi obtenu grâce ladite interface.

L'aspect intuitif des manoeuvres à effectuer pour le montage/démontage du balai est ainsi renforcé.

De manière générale ladite interface de connexion comprend au moins un connecteur hydraulique et/ou un connecteur électrique ainsi que des moyens assurant le verrouillage du connecteur électrique audit connecteur hydraulique.

En outre, ladite interface présente des moyens aptes à la bloquer sur un connecteur du balai en position de travail, lesdits moyens étant des seconds tétons, différents du ou des premiers tétons. Lesdits seconds tétons sont cylindriques et aptes à être retenus par des contre-formes, lesdites contre-formes étant au moins en partie cylindriques et appartenant audit connecteur du balai.

L'invention concerne encore un système d'essuyage de pare-brise de véhicule comprenant un balai, un bras d'entrainement ou porte-balai et un dispositif de connexion tel que décrit précédemment, permettant d'accrocher ledit balai audit porte-balai.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 est une vue en perspective d'un dispositif de fixation selon l'invention, en une position nominale de blocage de l'adaptateur dans le bras,
- la figure 2 est la même vue qu'à la figure 1, le bras étant écorché pour rendre visible le connecteur, l'adaptateur et le cavalier,
- la figure 3 est une vue de dessous du dispositif selon l'invention, en position nominale de blocage de l'adaptateur dans le bras, seuls le bras, l'adaptateur et le cavalier étant représentés,
- la figure 4 est aussi une vue de dessous du dispositif selon l'invention, mais en position de démontage de l'adaptateur par rapport au bras, seuls le bras, l'adaptateur et le cavalier étant représentés,
- la figure 5 reprend la figure 2 selon un angle de vue différent,
- la figure 6 reprend la figure 5 et permet de visualiser la manière dont le cavalier de l'invention est manipulé pour entrainer l'interface de connexion de la position de travail vers la position de service,
- la figure 7 est une vue en perspective de l'ensemble selon l'invention, en position de service,
- la figure 8 est la même vue qu'à la figure 7, la pièce terminale du porte-balai étant écorchée pour rendre visible l'interface de connexion retenue par le cavalier à l'intérieur de ladite pièce terminale.
- la figure 9 est une vue en perspective représentant partiellement un exemple de réalisation d'un dispositif de fixation selon l'invention et du système d'essuyage associé, en position de travail, la pièce terminale du porte-balai étant écorché pour rendre visible l'interface de connexion, la pièce intermédiaire dite levier, ainsi que le connecteur et l'adaptateur dudit système,
- la figure 10 reprend la figure 9 et permet de visualiser la manière dont le levier est manipulé pour entraîner l'interface de la position de travail vers la position de service,
- la figure 11 reprend les figures 9 et 10 lors du démontage du balai dudit système,
- la figure 12 est une vue de détail du dispositif de connexion du système d'essuyage des figures 9 à 11, en position de travail, au niveau des parties de l'interface et du levier coopérant entre elles,
- la figure 13 reprend la figure 12 dans une configuration proche de la position de service,
- la figure 14 est une vue de dessous du dispositif de connexion du système d'essuyage des 9 à 13, en position de travail, seuls le porte-balai, l'adaptateur et le levier étant représentés,
- la figure 15 reprend la figure 14, le système étant en position de service,
- la figure 16 reprend les figures 14 et 15 lors du démontage du balai,
- la figure 17 est une vue en perspective représentant partiellement un autre exemple de réalisation du système d'essuyage selon l'invention, en position de travail, la pièce terminale du porte-balai et le manche du levier étant écorchés pour rendre visible l'interface de connexion, le détail dudit levier, ainsi que le connecteur et l'adaptateur dudit système,
- la figure 18 reprend la figure 17 et permet de visualiser la manière dont le levier est manipulé pour entraîner l'interface de la position de travail vers la position de service,
- la figure 19 reprend les figures 17 et 18, lors du démontage du balai dudit système,
- la figure 20 est une vue de détail du dispositif de connexion du système d'essuyage des figures 17 à 19, en position de travail, au niveau des parties de l'interface et du levier coopérant entre elles,
- la figure 21 reprend la figure 20 dans une configuration proche de la position de service,
- la figure 22 est une vue de détail desdites parties en position de service,
- la figure 23 est une vue en perspective du système d'essuyage des figures 17 à 20, en position de travail.

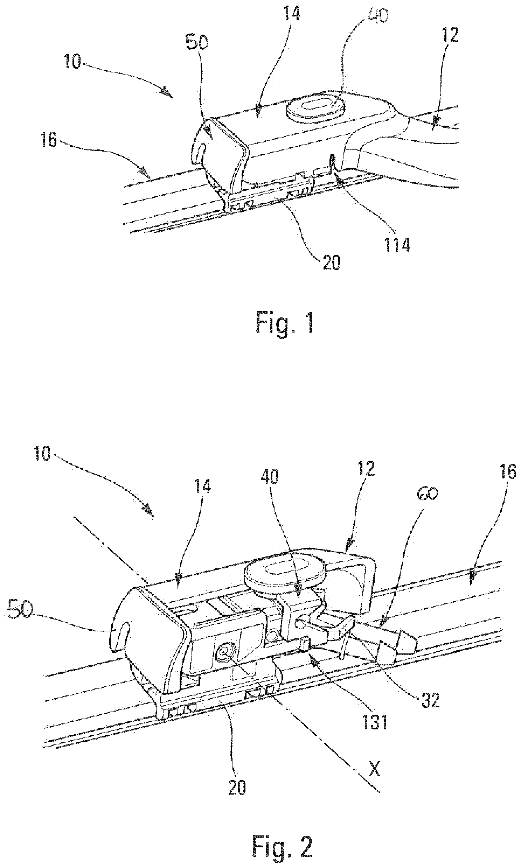

Comme illustré aux différentes figures, l'invention concerne un système d'essuyage 10, en particulier pour véhicule automobile. Il comprend un balai d'essuie-glace 16 et un bras d'entrainement 12 du balai 16. L'invention concerne également un dispositif de connexion du balai sur le bras 12. Ledit dispositif de connexion comprend un connecteur 20 destiné à être fixé au balai 16 et un adaptateur 50 de raccordement du connecteur 20 audit bras 12. Aux figures 1 et 2, l'adaptateur 50 est représenté en position nominale de blocage dans le bras 12.

Le connecteur mécanique 20 est une pièce qui est ici sertie sur le balai 16, alors que l'adaptateur 50 est une pièce intermédiaire qui permet la fixation du connecteur 20 sur le bras 12. Ces deux pièces pourront être reliées l'une à l'autre par un axe transversal qui autorise leur rotation relative, dans un plan perpendiculaire au pare-brise et passant par le bras 12. Cet axe transversal X est visible sur la figure 2.

La position nominale est ici assurée par des ergots 131 appartenant à l'adaptateur 50 qui viennent en prise dans des lumières 114 du bras 12. Lesdits ergots 131 sont de préférence au nombre de deux, appartenant chacun à une patte flexible 32 de l'adaptateur 50. En effet, l'adaptateur 50 comporte deux pattes flexibles 32 qui s'étendent, selon une direction perpendiculaire à l'axe transversal X, vers le bras 12. Ces deux pattes flexibles 32 pourront être situées de chaque côté de l'adaptateur 50, de façon symétriques par rapport à un plan perpendiculaire à l'axe transversal X.

Les lumières 114 sont ici des évidements, de préférence débouchant, situés dans une partie distale du bras 12 appelée pièce terminale ou tête du bras 12 par la suite. Les lumières 114 présentent une forme permettant de loger lesdits ergots 131. Ces évidements peuvent être obtenus directement lors du formage du bras 12, voire par traitement ultérieur, par exemple par des usinages réalisés localement sur la tête du bras 12. Ces lumières 114 sont de préférence au nombre de deux, situées de chaque côté de la tête du bras 12, de façon symétrique par rapport à un plan perpendiculaire à l'axe transversal X.

La taille respective des ergots 131 et des évidements 114 empêche leur manipulation par un utilisateur. Autrement dit, les ergots 131, par leur dimensionnement ainsi que par le dimensionnement des évidements 114, sont configurés pour qu'un utilisateur ne puisse pas les désengager manuellement, notamment en raison de leur petite section et/ou de l'épaisseur importante des parois de la tête de bras 12.

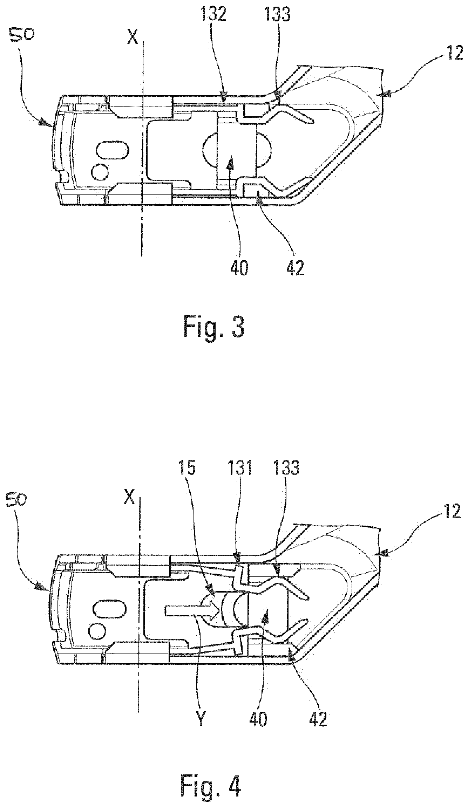

Comme il est visible sur la figure 2, selon un premier mode de réalisation, des butées 133 pourront être situées dans le prolongement desdits ergots 131, sur la même patte 32 issue de matière avec l'adaptateur 50. La fonction de ces butées 133 est illustrée aux figures 3 et 4.

Les ergots 131 peuvent alors avoir une forme parallélépipédique, cylindrique, pyramidale ou tout autres formes du moment qu'ils soient aptes à se loger à l'intérieur des lumières 114 du bras 12.

La figure 3 est une vue de dessous du dispositif selon l'invention, en position nominale de blocage de l'adaptateur 50 dans le bras 12, seuls le bras 12, l'adaptateur 50 et une pièce intermédiaire 40 du dispositif de connexion sont représentées.

La pièce intermédiaire 40 est appelée cavalier. Le cavalier 40 est mobile en translation dans le bras 12 selon une direction de montage/démontage de l'adaptateur 50 dans le bras 12. Cette direction de montage/démontage est perpendiculaire à l'axe transversal X et est repérée par une flèche Y sur la figure 4, la flèche Y étant orientée dans le sens du démontage de l'adaptateur 50 par rapport au bras 12.

Le cavalier 40 pourra en outre comporter des cames 42. En position nominale de blocage, comme cela est visible sur la figure 2, ces cames 42 ne contribuent pas au positionnement de l'adaptateur 50 qui, comme déjà expliqué, est bloqué par les ergots 131 en prise dans les évidements 114.

Par contre, en position de démontage, comme illustré à la figure 4, ces cames 42 agissent sur les butées 133 de manière à faire sortir les ergots 131 des lumières 114 du bras 12, en entrainant le fléchissement des pattes 32 de l'adaptateur, selon une direction d'escamotage comprenant une composante parallèle à l'axe transversal X. Il est intéressant de noter que ces cames présentent des formes qui facilitent l'actionnement des butées 133. Lesdites formes sont des pentes, tel que des chanfreins, par exemple.

Comme il vient d'être décrit, le maintien du balai 16 sur le bras 12 est ici réalisé à l'aide des deux pattes flexibles 32 appartenant à l'adaptateur 50. Ces deux pattes flexibles 32 assurent le maintien du balai 16 grâce aux ergots 131 qui viennent se loger dans les lumières 114 du bras 12. De manière générale, on comprend que ledit adaptateur 50 comprend des moyens de maintien sur le bras 12 en position nominale de blocage, ici les ergots 131 liés aux pattes flexibles 32, et ledit cavalier 40 est prévu mobile dans le bras 12 par rapport à l'adaptateur 50. En outre, ledit cavalier 40 comprend des moyens de désengagement desdits moyens de maintien, ici lesdites cames 42 agissant sur lesdites pattes flexibles 32. On autorise de la sorte le montage et/ou le démontage de l'adaptateur 50 sur le bras 12.

Comme déjà dit, les ergots 131 ne sont pas accessibles manuellement du fait de leur petite taille. Seul un déplacement, par exemple en translation, dudit cavalier 40 dans le bras 12 est apte à entrainer le désengagement des ergots 131 et permet ainsi le désaccouplement de l'adaptateur 50 et du bras 12 ; les cames 42 du cavalier 40 agissant sur les pattes flexibles 32 pour faire sortir les ergots 131 des lumières 114 du bras 12.

Le cavalier 40 pourra comprendre un bouton 45. Grâce audit bouton 45, le cavalier 40 est accessible en position nominale de blocage, en position de démontage et lors du montage de l'adaptateur 50 dans le bras 12. Ainsi, le bouton 45 permet de faire passer le dispositif de la position nominale de blocage à la position de démontage.

Plus particulièrement, ledit bouton 45 est mobile le long d'une fente 15. Ladite fente 15 est située sur le bras 12 et orientée selon la direction de montage/démontage. Comme il est visible sur la figure 4, cette fente 15 est située sur une face dudit bras 12 destinée à être située à l'opposé du balai 16. Elle pourra être située sur une ou plusieurs autres faces du bras 12.

Il est à noter que la tête du bras 12 est prévue pour recouvrir en partie ledit cavalier 40, sans venir couvrir le bouton 45.

La figure 4 illustre une position dans laquelle le bouton 45 est actionné dans la fente 15 dans le sens du démontage de l'adaptateur 50. L'actionnement du bouton 45 conduit le cavalier 40 à venir actionner le fléchissement des pattes flexibles 32 en butant dessus à l'aide des cames 42, ici issue de matière avec ledit cavalier 40. Il est alors possible de tirer longitudinalement sur le balai 16 pour le désassembler du bras 12.

Pour le remontage on effectue les opérations inverses.

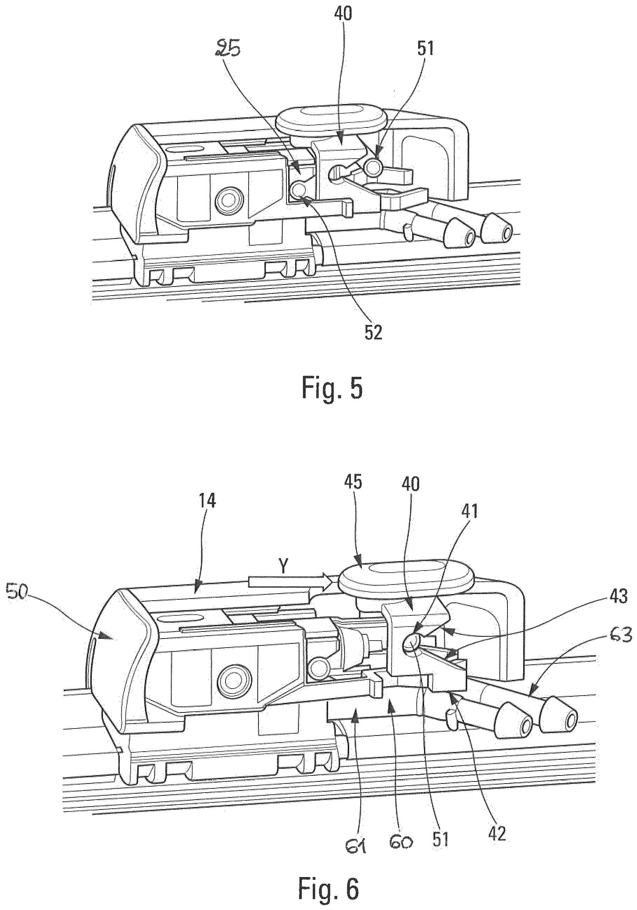

Il est à noter que des variantes de réalisation sont bien sûr possibles. Notamment il est aussi envisageable, dans un mode de réalisation supplémentaire, que le dispositif décrit ci-dessus ait au moins une fonction supplémentaire. Par exemple, éviter qu'une interface de connexion hydraulique et/ou électrique, présente dans la tête du bras 12, ne soit retenu par le connecteur 20 lors du mouvement de séparation entre le balai 16 et le bras 12. Ce mode de réalisation supplémentaire est décrit dans la suite de cette description aux figures 5 et suivantes.

Ledit dispositif de connexion comprend ici une interface de connexion 60. Cette interface de connexion 60 permet l'alimentation du balai 16 en liquide lave-vitre et/ou en électricité lorsqu'il est prévu de pouvoir chauffer la structure dudit balai 16, par exemple.

Dans une position dite de travail, l'interface 60 est libre par rapport à ladite pièce terminale 14 mais elle est maintenue par rapport au balai 16. Dans ladite position de travail, le balai est alors en dans la position nominale de blocage évoquée plus haut.

Le maintien de l'interface 60 par rapport au balai 16 est alors ici réalisé par le connecteur 20 qui présente des formes caractéristiques permettant de retenir ladite interface de connexion 60.

Ces formes caractéristiques sont visibles sur la figure 5. Il s'agit de contre-formes 25, en partie cylindriques, qui coopèrent avec des ergots 52 appartenant à l'interface de connexion 60. Les contre-formes 25 ne sont pas fermées, elles présentent chacune une ouverture empruntée par chacun des ergots 52 de l'interface de connexion pour venir s'y loger. Ces ergots 52 de l'interface de connexion sont de préférence au nombre de deux, situés sur des faces latérales de l'interface 60, opposés l'un à l'autre par rapport à une direction d'extension longitudinale de ladite interface 60, la longueur de ladite interface 60 étant orientée dans la direction longitudinale de la pièce terminale 14.

Ces ergots de l'interface de connexion 52 seront appelés seconds ergots par la suite, en comparaison à des premiers ergots 51 qui appartiennent aussi à l'interface de connexion 60 mais qui ont une autre fonction.

Lesdits premiers ergots 51 sont visibles sur la figure 5; leur fonction est avantageusement illustrée à la figure 6. Ces premiers ergots 51 sont, de préférence, au nombre de deux, situés sur les faces latérales de l'interface 60, opposés l'un à l'autre par rapport à la direction longitudinale de ladite interface 60. Il est à noter que lesdits seconds ergots 52 sont plus proches du connecteur mécanique 20 que peuvent l'être lesdits premiers ergots 51.

Les premiers ergots 51 sont particulièrement avantageux car ils participent au passage de l'ensemble selon l'invention, de la position de travail à une position dite de service. La position de service est la position pour laquelle le balai 16 est désassemblé du porte-balai 12. Dans la position de service, l'interface 60 est retenue de manière orientée à l'intérieur de la pièce terminale 14. Cette retenue est avantageusement permise par ledit cavalier 40.

En effet, lesdits premiers ergots 51 sont aptes à venir en contact avec le cavalier 40, en particulier dans des logements 41 de celui-ci. L'entrée des ergots 51 dans les logements 41 est facilitée par des formes 43 de guidage, à savoir des pentes de guidage qui, lorsqu'elles sont couplées, forment des entonnoirs. Les premiers ergots 51 sont de préférence cylindriques. Les logements 41 agissent comme des premières butées entre l'interface 60 et le cavalier 40. C'est pourquoi toute autre forme est envisageable pour lesdits premiers ergots qui peuvent aussi être parallélépipédiques ou pyramidaux, par exemple.

Le cavalier 40 pourra aussi être muni de deuxièmes butées 42 qui empêchent l'interface 60 de pivoter par rapport à lui, en particulier en cas de premiers ergots 51 cylindriques. Ces deuxièmes butées 42 empêchent le pivotement de ladite interface dans la pièce terminale lors du désaccouplement du balai 16 par rapport à la pièce terminale 14. En effet, lesdites deuxièmes butées 42 sont configurées pour prendre appui sur l'interface 60, en particulier sur les canalisations de liquide 63 d'un connecteur hydraulique 61 appartenant à l'interface de connexion 60.

Il est à noter qu'en position de travail, le cavalier 40 n'entre avantageusement pas en contact avec l'interface 60 comme cela est visible sur la figure 5.

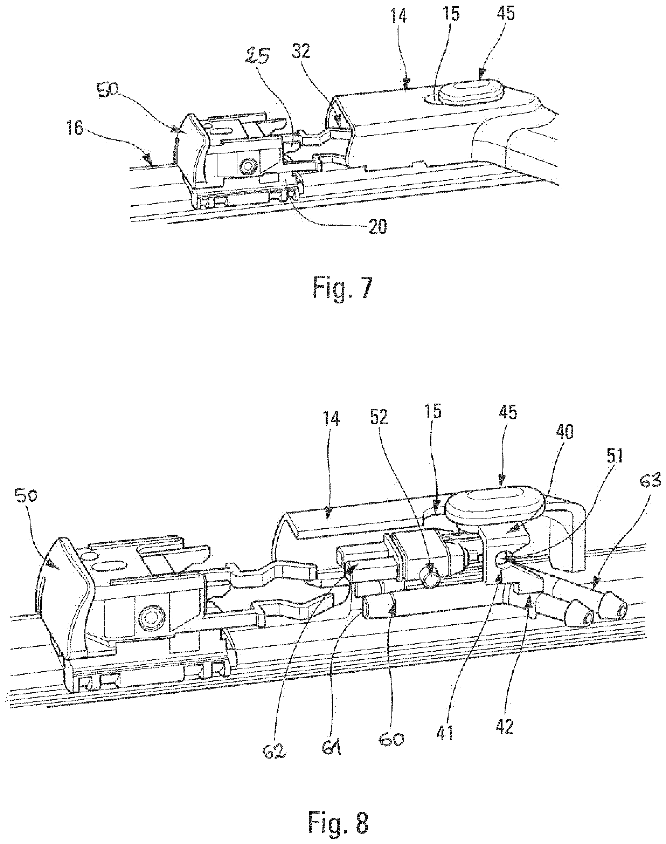

A la figure 7, on peut constater que l'interface 60 n'est plus couplée au balai 16, l'adaptateur 50 ayant été désassemblé de la pièce terminale 14. Cela signifie que les deuxièmes ergots 52 ne sont plus en prise dans les contre-formes 25 du connecteur 20. Cela signifie aussi que la partie distale des pattes 32 de l'adaptateur 50 ne vient plus en butée avec l'interface de connexion 60.

La figure 8 est la même vue qu'à la figure 7, la pièce terminale du porte-balai étant écorchée pour rendre visible l'interface de connexion. On peut y constater que l'interface 60 est alors retenue par le cavalier 40 à l'intérieur de la pièce terminale 14. Cette figure illustre le double verrouillage de l'interface 60 à l'intérieur de la pièce terminale 14 ; ce double verrouillage étant réalisé par le cavalier 40, à l'aide des butées 41 et 42 décrites ci-dessus, et permettant d'orienter l'interface de connexion 60 pour faciliter le montage d'un nouveau balai.

Il est à noter que cette invention concerne de préférence la connexion hydraulique et/ou électrique d'un balai d'essuyage 16 possédant une fonction de lavage embarqué et/ou un système de chauffage de sa structure. En particulier, cette invention concerne la connexion et la déconnexion hydraulique et/ou électrique du balai 16, d'avec le porte-balai 12 en un seul mouvement lors du désassemblage du balai 16 de son porte-balai 12.

La description des figures 3 à 5 a permis de mettre en évidence que l'interface de connexion 60 est retenu sur le balai 16 via le connecteur 20 en position de travail, à savoir lorsque le balai 16 et le porte-balai 12 sont assemblés, tout en autorisant la rotation du balai 16 par rapport au bras 12 autour de l'axe X.

La description des figures 6 à 8 a permis d'introduire le cavalier 40 qui vient buter, entre autres, contre les premiers ergots 51 de l'interface de connexion lors du passage de la position de travail à la position de service ; la position de service correspondant au désassemblage entre le balai 16 et le porte-balai 12, l'interface de connexion 60 étant alors maintenu orientée par rapport au bras 12.

L'action de désassemblage s'effectue lorsque l'on coulisse le cavalier 40 par rapport à la pièce terminale 14 du porte-balai 12. Cela est permis car une partie du cavalier 40 est accessible de façon à pouvoir être manipulé pour passer de la position de travail à la position de service, en particulier par coopération du bouton 45 et de la fente 15.

La direction de montage et/ou démontage est indiquée par la flèche Y sur la figure 6. Dans le cas de cette flèche Y, le bouton 45 est actionné dans la fente 15 dans le sens du démontage de l'adaptateur 50 - la fente 15 étant particulièrement visible sur les figures 7 et 8. L'actionnement du bouton 45 conduit le cavalier 40 à venir en butée avec l'interface 60, en deux endroits : par les premières butées 41 et les secondes butées 42. Il est alors possible de tirer longitudinalement sur le balai 16 pour le désassembler du porte-balai 12 tout en retenant l'interface 60 dans la partie terminale 14 du porte-balai 12. Pour rappel, ceci évite que ladite interface 60 ne soit entraînée par le connecteur mécanique 20 dans son mouvement de séparation d'avec le porte-balai 12 de l'essuie-glace.

Pour le remontage on effectue les opérations inverses.

Il est à noter que dans l'exemple décrit ci-dessus, l'interface de connexion 60 comprend un connecteur hydraulique 61 et un connecteur électrique 62, comme cela est particulièrement visible sur la figure 6 ; ladite interface 60 comprenant des moyens assurant le verrouillage du connecteur hydraulique 61 sur le connecteur électrique 62 (moyens de verrouillage non détaillés sur les figures).

Ici, les premiers et seconds ergots 51, 52 sont prévus sur le connecteur électrique 62 plutôt que sur le connecteur hydraulique 61. Il est cependant possible de les prévoir sur le connecteur hydraulique 61.

Il est aussi à noter que d'autres variantes de réalisation sont bien sûr possibles. Notamment il est aussi possible, dans un mode de réalisation supplémentaire, que les premiers et seconds ergots dudit ensemble soient situés sur le cavalier 40 alors que les butées seraient, quant à elles, situées sur l'interface 60.

Il est aussi possible, dans une variante de réalisation, qu'au moins une partie de ladite pièce intermédiaire 30, 30' soit configurée de sorte à être accessible de façon à pouvoir être manipulée en rotation pour passer de la position de travail à la position de service.

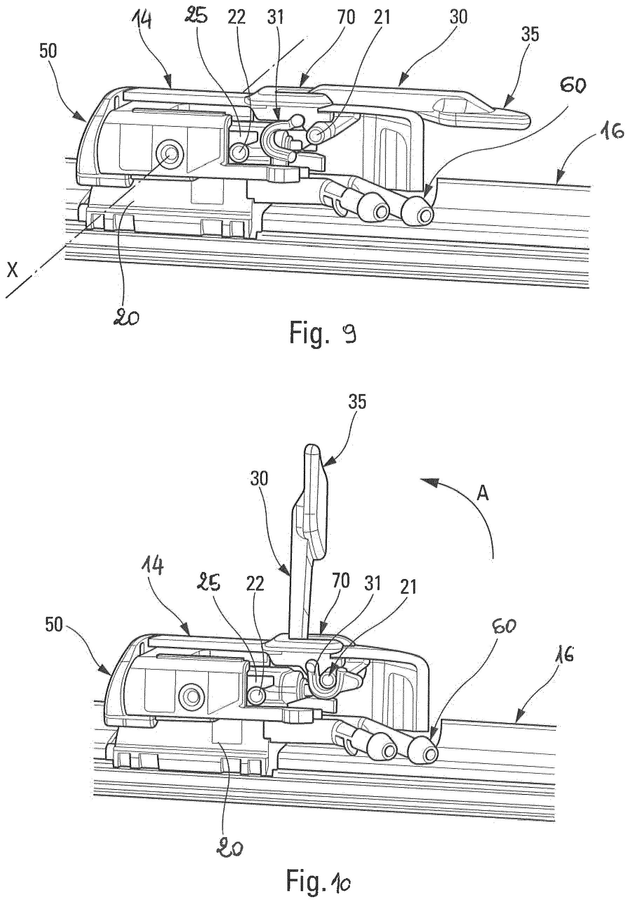

La description des figures 9 à 23 qui suit s'attache à détailler cette variante.

Ladite pièce terminale 14 forme avec l'interface de connexion 60 et la pièce intermédiaire 30, 30' un ensemble. Pour rappel, ledit ensemble est apte à occuper la position de travail dans laquelle ladite interface 60 est libre par rapport à ladite pièce terminale 14 et la position de service dans laquelle ladite interface 60 est retenue de manière orientée par rapport à ladite pièce terminale 14 par ladite pièce intermédiaire 30, 30'.

Comme déjà dit, au moins une partie de ladite pièce intermédiaire 30, 30' est configurée de sorte à être accessible de façon à pouvoir être manipulée en rotation, en particulier autour d'un axe Z de la pièce terminale 14, pour passer de la position de travail à la position de service. On dispose ainsi d'un levier, avantageusement manipulable depuis l'extérieur.

Ledit axe de rotation Z, appartenant à la pièce terminale 14, est avantageusement prévu parallèle à l'axe de rotation X de l'adaptateur sur le connecteur mécanique.

Comme dans le mode précédent, ledit adaptateur 50 est configuré pour être monté sur le porte-balai 16 selon une direction Y', dite de montage/démontage, située dans un plan perpendiculaire audit premier axe de rotation X.

Sur les figures 9, 10, 11 et 18 sont visibles des premiers tétons 21 situés sur l'interface 60 de connexion, ainsi que des logements 31, 31' situés sur la pièce intermédiaire 30, 30', dite levier dans le présent mode de réalisation. Ces premiers tétons 21 sont, de préférence, au nombre de deux, situés sur les faces latérales de l'interface 60, opposés l'un à l'autre par rapport à la direction longitudinale de ladite interface 60. Ces premiers tétons 21 sont, de préférence, cylindriques.

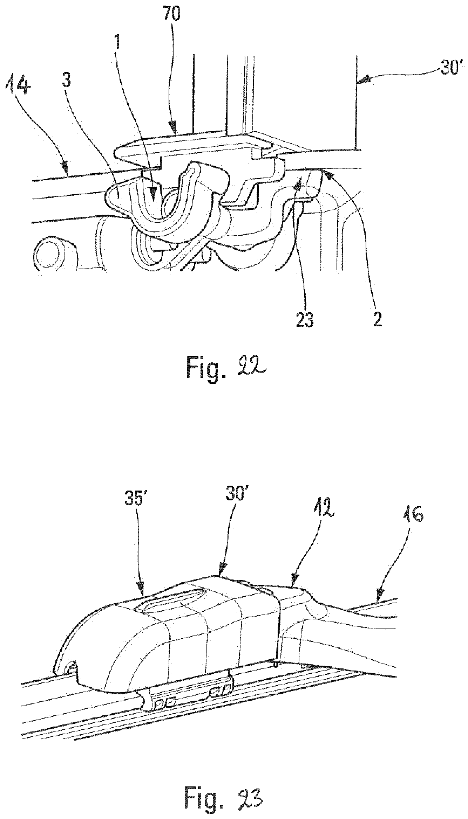

Lesdits logements 31, 31' sont aptes à retenir lesdits premiers tétons 21, en particulier en position de service. Ils sont situés sur le levier 30, 30' et sont de préférence au nombre deux, placés en regard desdits tétons 21. Ils sont mobiles en rotation, comme le levier 30, 30' et définissent une première butée 1 pour lesdits premiers tétons 21. Cette première butée 1 est particulièrement visible à la figure 22 dans la variante en cause du présent mode de réalisation.

Lesdits logements 31, 31' sont des crochets, au moins en partie, cylindriques, venus de matière avec ledit levier 30, 30'.

Les logements 31, 31' agissent comme des premières butées 1 entre l'interface 60 et le levier 30, 30'. C'est pourquoi toute autre forme est envisageable pour lesdits premiers tétons 21 qui peuvent aussi être parallélépipédiques ou pyramidaux, par exemple.

Les premiers tétons 21 sont particulièrement avantageux car ils participent au passage de l'ensemble selon le présent mode de réalisation, de la position de travail à la position de service.

En position de travail, le maintien de l'interface 60 par rapport au balai 16 est réalisé par le connecteur 20 comme déjà décrit. Dans le cas du présent mode de réalisation, les contre-formes 25 coopèrent avec des seconds tétons qui sont référencés 22.

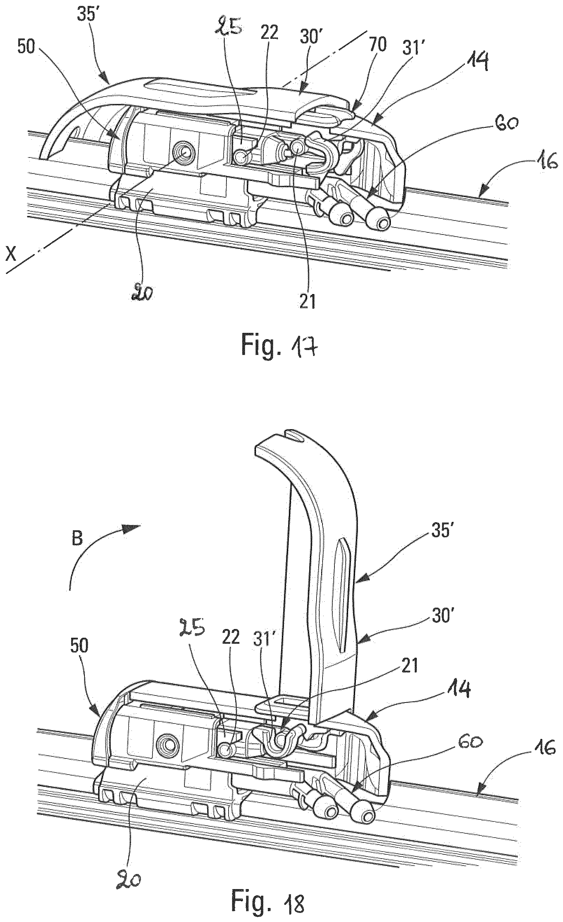

Il est à noter qu'en position de travail, le levier n'entre avantageusement pas en contact avec l'interface 60 comme cela est visible sur les figures 9 et 17.

D'autre part, il est visible sur la figure 22, une deuxième butée 2 définie par la pièce terminale 14. Cette deuxième butée est apte à empêcher ladite interface 60 de pivoter à l'intérieur de ladite pièce terminale 14, en particulier en cas de premiers tétons 21 cylindriques. Cela est rendu possible par la géométrie extérieure 23 de ladite interface 60 qui est apte à coopérer avec ladite deuxième butée 2. Cette deuxième butée 2 empêche le pivotement de ladite interface 60 dans la pièce terminale 14 lors du désaccouplement du balai 16 par rapport à la pièce terminale 14. En effet, ladite deuxième butée 2 est configurée pour venir appuyer sur l'interface 60, en particulier sur une partie 23 sensiblement plane de ladite interface 60. Ladite partie 23 sensiblement plane est de préférence située du coté de ladite interface 60 opposé à son extrémité distale par rapport auxdits premiers tétons.

Un double verrouillage de ladite interface 60 à l'intérieur de la pièce terminale 14 est donc réalisé à l'aide des première et deuxième butées 1, 2 décrites ci-dessus, et, dans les modes de réalisation illustrés, ce sont lesdites première et deuxième butées 1, 2 qui avec les formes prévues en contrepartie sur l'interface de connexion 60, à savoir le ou les premiers tétons 21 et la partie 23 sensiblement plane, permettent d'orienter l'interface de connexion 60 pour faciliter le montage d'un nouveau balai.

Le passage de la position de travail vers la position de service est particulièrement visible sur les figures 10 et 18.

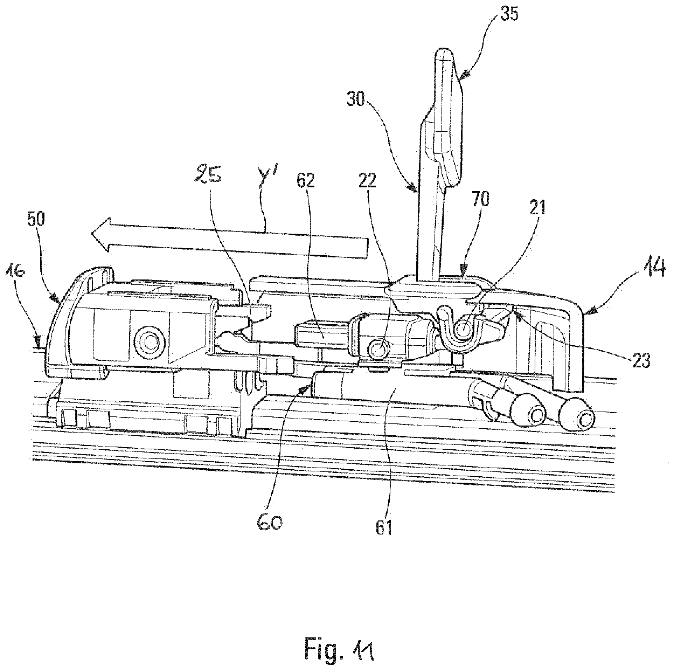

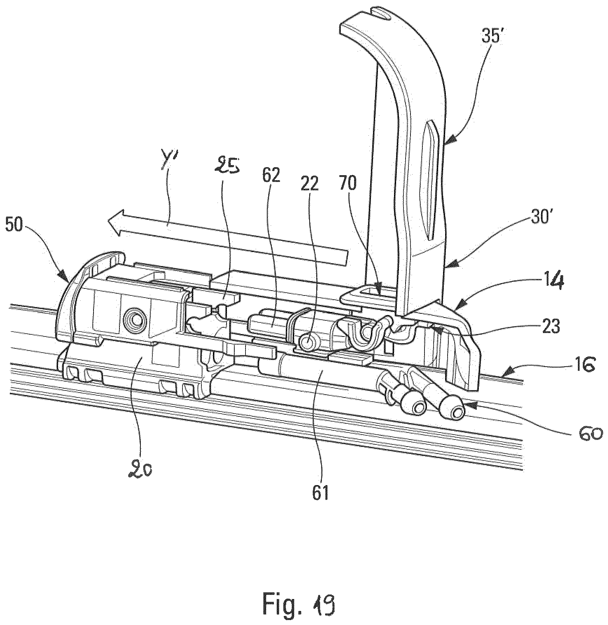

L'ensemble selon le présent mode de réalisation, en position de service, est illustré aux figures 11 et 19.

On y constate que l'interface 60 est retenue par les crochets 31, 31' du levier 30, 30' à l'intérieur de la pièce terminale 14. Ces figures illustrent aussi le deuxième verrouillage de l'interface 60 à l'intérieur de la pièce terminale 14 par l'intermédiaire de la partie 23 sensiblement plane de ladite interface.

On y voit que les deuxièmes tétons 22 ne sont plus en prise dans les contre-formes 42 du connecteur 40.

On peut aussi y constater que l'interface 20 n'est plus couplée au balai 16, l'adaptateur 50 ayant été désassemblé de la pièce terminale 14.

Dans ce mode, outre le connecteur 20 et l'adaptateur de raccordement 50 du connecteur 20 audit porte-balai 12, le dispositif de connexion selon l'invention pourra comprendre un ensemble tel que décrit plus haut.

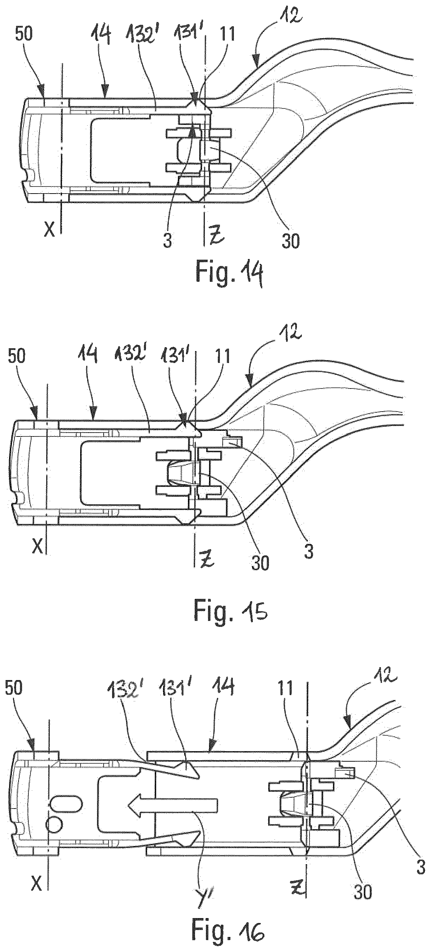

Les figures 14, 15 et 16 illustrent les caractéristiques de ce mode permettant le blocage/déblocage de l'adaptateur dans le bras grâce audit levier. Plus précisément, ledit levier 30, 30' comprend des moyens de verrouillage 3 desdits moyens de maintien 131' de l'adaptateur, de manière à retenir ledit adaptateur 50 sur le porte-balai 12.

La position nominale de blocage est ici assurée par des ergots 131' appartenant à l'adaptateur 50 qui viennent en prise dans des lumières 11 du porte-balai 12. Lesdits ergots 131' sont de préférence au nombre de deux, appartenant chacun à une patte flexible 132' de l'adaptateur 50. En effet, l'adaptateur 50 comporte deux pattes flexibles 132' qui s'étendent, selon une direction perpendiculaire à l'axe transversal X, vers le porte-balai 12. Ces deux pattes flexibles 132' pourront être situées de chaque côté de l'adaptateur 50, de façon symétriques par rapport à un plan perpendiculaire à l'axe transversal X.

Les lumières 11 sont ici des évidements, de préférence débouchant, situés dans la pièce terminale 14. Les lumières 11 présentent une forme permettant de loger lesdits ergots 131'. Ces évidements peuvent être obtenus directement lors du formage du porte-balai 12, voire par traitement ultérieur, par exemple par des usinages réalisés localement sur la pièce terminale 14. Ces lumières 131' sont de préférence au nombre de deux, situées de chaque côté de la pièce terminale 14, de façon symétrique par rapport à un plan perpendiculaire à l'axe transversal X.

La taille respective des ergots 131' et des évidements 11 empêche ici leur manipulation par un utilisateur. Autrement dit, les ergots 131', par leur dimensionnement ainsi que par le dimensionnement des évidements 11, sont configurés pour qu'un utilisateur ne puisse pas les désengager manuellement, notamment en raison de leur petite section et/ou de l'épaisseur importante des parois de la pièce terminale 14.

Cependant, l'utilisateur pourra désengager lesdits ergots 131' des lumières 11 de la manière qui va être décrite ci-dessous.

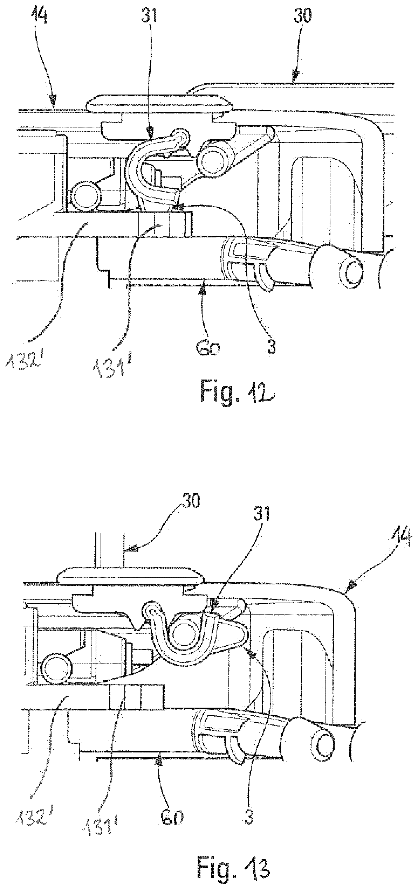

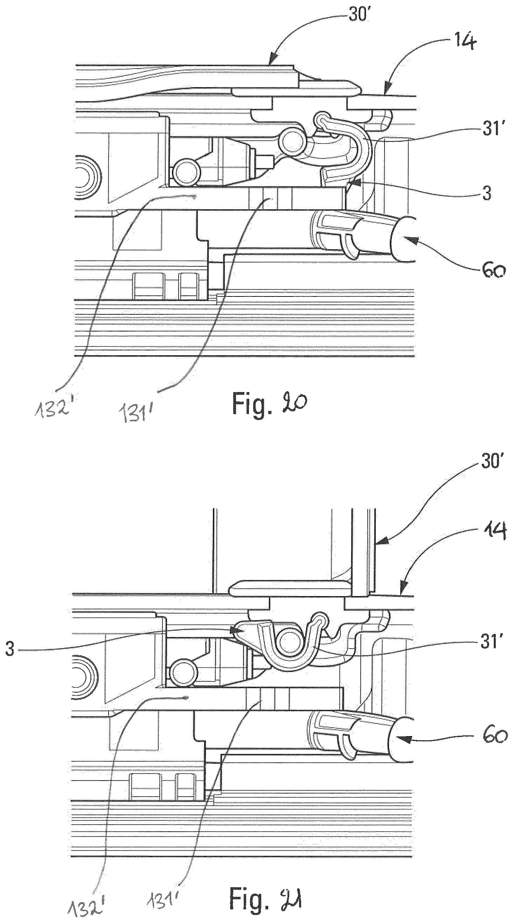

Les figures 12 et 20 donnent des vues de détail des moyens de verrouillage 3 du dispositif selon l'invention. Lesdits moyens de verrouillage 3 comprennent au moins une partie en saillie 3 venue de matière avec le levier 30, 30'. Lesdites parties en saillie 3 définissent une troisième butée apte à empêcher l'escamotage desdits ergots 131' en position nominale de blocage. Elles sont de préférence au nombre de deux, chacune située au niveau des crochets 31, 31' dans le cas d'une utilisation d'un levier servant à retenir une interface de connexion. Elles sont mobiles en rotation comme ceux-ci.

Par ailleurs, lesdits ergots 131', sont escamotables selon la direction d'escamotage déjà décrite lors de la présentation du précédent mode de réalisation. En effet, lesdits ergots 131' sont, comme évoqué ci-dessus, situés sur une patte 132' venue de matière avec l'adaptateur 50. Leur escamotage est obtenu par le fléchissement desdites pattes 132' de l'adaptateur 50.

En position nominale de blocage, les parties en saillie 3 viennent en butée contre lesdites pattes 132' et empêchent leur fléchissement dans la direction d'escamotage.

La figure 15 est aussi une vue de dessous du dispositif selon l'invention, les moyens de maintien 131' n'étant pas verrouillés, seuls le porte-balai 12, l'adaptateur 50 et le levier 30, 30' étant représentés.

Le levier 30, 30' a été pivoté par rapport au deuxième axe de rotation Z de manière à dégager les troisièmes butées 3.

Sur les figures 13 et 21 il est particulièrement visible que les parties en saillies 3 n'empêchent plus le fléchissement des pattes 132' de l'adaptateur 50 ; les parties en saillie 3 ne venant plus en butée avec lesdites pattes 132'.

La figure 16 est encore une vue de dessous du dispositif selon l'invention, les moyens de maintien 3 étant escamotés dans la pièce terminale 14, seuls le porte-balai 12, l'adaptateur 50 et le levier 30 étant représentés.

Il est visible, sur cette figure, la direction Y' de montage/démontage selon laquelle ledit adaptateur 50 est configuré pour être monté sur le porte-balai 12. Sur la figure 16, le sens donné à cette direction Y' est celui du démontage de l'adaptateur 50 par rapport à ladite pièce terminale 14. Ladite direction Y' est aussi référencée sur les figures 11 et 19.

Lesdits ergots 131' et lesdites lumières 11 sont configurés pour permettre l'escamotage desdits ergots. En effet, ils présentent des formes qui facilitent leur dégagement l'un de l'autre. Lesdites formes sont, par exemple, des pentes, tel que des chanfreins.

Ainsi, comme illustré à la figure 16, ces formes agissent de manière à faciliter la sortie des ergots 131' des lumières 11 du porte-balai 12, en entrainant le fléchissement des pattes 132' de l'adaptateur 50, selon la direction d'escamotage.

Comme déjà dit, les ergots 131' ne sont pas accessibles manuellement du fait de leur petite taille. Seul un déplacement, par exemple en rotation, dudit levier 30, 30' par rapport à la pièce terminale 14 est apte à autoriser le désengagement des moyens de verrouillage et autorise ainsi le désaccouplement de l'adaptateur 50 et du bras 12 ; les ergots 51 étant alors libres de sortir des lumières 11 du bras 12.

Pour compléter la description du présent mode de réalisation, il est à noter que l'action de désassemblage peut s'effectuer une fois que l'on a fait pivoter le levier 30, 30' par rapport à la pièce terminale 14 du porte-balai 12. Cela est permis car au moins une partie du levier 30, 30' est accessible extérieurement. Cette partie forme, par exemple, un manche 35, 35' du levier 30, 30'.

Ledit manche 35, 35' couvre au moins une partie dudit porte-balai et est situé sur une face du porte-balai 12 destinée à être à l'opposé du balai 16. Ce manche 35, 35' adopte, en nominale de blocage, une position parallèle par rapport à la direction longitudinale du porte-balai 12 et, pour le démontage, une position orthogonale par rapport à la direction longitudinale du porte-balai 12.

Selon une première variante du présent mode de réalisation illustrée aux figures 9 à 13, le manche 35 couvre une partie seulement de la pièce terminale 14 du porte-balai 12. De plus, en position nominale de blocage, la partie distale du manche 35 est tourné du côté du porte-balai 12.

Pour passer en position de démontage, il suffit de faire subir au levier 30 une rotation d'un quart de cercle dans le sens antihoraire, repéré par la flèche A sur la figure 10. Cela entraine une rotation des crochets 31 d'un même quart de cercle. Lesdits crochets 31 viennent alors retenir les premiers tétons 21 et déverrouiller les pattes flexibles 132' afin de permettre aux ergots 131' de se désengager des lumières 11 réalisées dans la pièce terminale 14 du porte-balai 12. L'utilisateur peut alors désassembler le balai 16 du porte-balai 12 en tirant longitudinalement sur le balai 16 dans la direction Y', tout en étant assuré que l'interface de connexion 60 d'un tel ensemble d'essuyage soit maintenue dans la pièce terminale 14.

Selon une deuxième variante du présent mode de réalisation illustrée aux figures 17 à 23, le manche 35' est destiné à couvrir la pièce terminale 14 du porte-balai 12, le connecteur 20 et l'adaptateur 50. Le manche 35' est alors un capot de couverture qui peut être clipé au balai 16. De plus, en position nominale de blocage, la partie distale du manche 35' est tournée du côté opposé au porte-balai 12.

Pour passer en position de démontage, il suffit de faire subir au levier 30' une rotation d'un quart de cercle dans le sens horaire, repéré par la flèche B sur la figure 18. Cela entraine une rotation des crochets 31' d'un même quart de cercle. Lesdits crochets 31' viennent alors retenir les premiers tétons 21 et déverrouiller les pattes flexibles 132' afin de permettre aux ergots 131' de se désengager des lumières 11 réalisées dans la pièce terminale 14 du porte-balai 12. L'utilisateur peut alors désassembler le balai 16 du porte-balai 12 en tirant longitudinalement sur le balai 16 dans la direction Y', tout étant assuré que l'interface de connexion d'un tel ensemble d'essuyage soit maintenue dans la pièce terminale 14.

Concernant ces deux variantes du présent mode de réalisation, le passage de la position de service à la position de travail s'effectue par les opérations inverses.

Il est à noter que, comme dans les exemples décrit ci-dessus, l'interface de connexion 60 comprend un connecteur hydraulique 61 et un connecteur électrique 62, comme cela est particulièrement visible sur les figures 11 et 19 ; ladite interface 60 comprenant des moyens assurant le verrouillage du connecteur hydraulique 61 sur le connecteur électrique 62 (moyens de verrouillage non détaillés sur les figures).

Ici, les premiers et seconds tétons 21, 22 sont prévus sur le connecteur électrique 62 plutôt que sur le connecteur hydraulique 61. Il est cependant possible de les prévoir sur le connecteur hydraulique 61.

Il est aussi à noter que d'autres variantes de réalisation sont bien sûr possibles. Notamment il est aussi envisageable, dans un mode de réalisation supplémentaire, que les premiers et seconds ergots dudit ensemble soient situés sur le levier 30, 30' alors que les butées seraient, quant à elles, situées sur l'interface 60.

Il est encore à noter que la pièce terminale 14 comprend une fenêtre pour le passage dudit levier 30, 30'. L'ensemble évoqué dans le présent mode de réalisation comprend ici une pièce supplémentaire 70, solidaire de la pièce terminale 14, configurée pour permettre une articulation entre ledit levier 30, 30' et ladite pièce terminale 14.

## Revendications

1. Dispositif de fixation d'un balai d'essuie-glace (16) sur un bras d'entrainement (12) d'un système d'essuyage (10), ledit dispositif comprenant une pièce terminale (14) de bras (12), un connecteur (20) destiné à être fixé au balai (16), un adaptateur de raccordement (50) du connecteur (20) audit bras (12), et une pièce intermédiaire (40, 30, 30'), ledit adaptateur (50) comprenant des moyens de maintien sur le bras en une position nominale de blocage, ladite pièce intermédiaire (40, 30, 30') étant mobile dans ladite pièce terminale (14) par rapport à l'adaptateur (50), **caractérisé en ce que** la pièce intermédiaire comprenne des moyens de désengagement et/ou de verrouillage desdits moyens de maintien, de manière à autoriser un montage et/ou un démontage de l'adaptateur (50) sur le bras (12) et/ou de manière à retenir l'adaptateur (50) sur le bras (12) en position nominale de blocage, dans lequel les moyens de désengagement sont configurés pour agir sur les moyens de maintien de manière à les escamoter lors du montage et/ou du démontage de l'adaptateur (50) sur le bras (12).

2. Dispositif selon la revendication précédente, dans lequel ledit adaptateur (50) est lié au connecteur (20) avec un degré de liberté en pivotement autour d'un premier axe de rotation (X) et ladite pièce intermédiaire (40) est mobile en translation dans le bras (12) selon une direction (Y), dite de montage/démontage, située dans un plan perpendiculaire à l'axe de rotation (X).

3. Dispositif selon l'une quelconque des revendications précédentes, dans lequel les moyens de maintien comprennent au moins une butée escamotable (133) selon une direction, dite d'escamotage, ladite direction d'escamotage comprenant une composante parallèle audit premier axe de rotation (X), les moyens de désengagement comprenant au moins une came (42) agissant sur la ou les butées (133) de manière à les entrainer dans ladite direction d'escamotage.

4. Dispositif selon la revendication précédente, dans lequel les moyens de maintien comprennent des ergots (131) aptes à venir se loger en position nominale de blocage à l'intérieur d'une ou de lumières (114) réalisées dans le bras (12), la ou les cames (42) agissant sur la ou les butées (133) de manière à faire sortir le ou les ergots (131) de la ou des lumières (114) du bras (12).

5. Dispositif selon la revendication précédente, dans lequel la ou les butées (133) et le ou les ergots sont situés sur une patte (32) issue de matière avec l'adaptateur (50).

6. Dispositif selon l'une quelconque des revendications précédentes, comprenant un ensemble muni de la pièce terminale (14) du bras d'entrainement, d'une interface de connexion (60) et de ladite pièce intermédiaire (40), dite cavalier, ledit ensemble étant apte à occuper une position de travail dans laquelle ladite interface (60) est libre par rapport à ladite pièce terminale (14) et une position dite de service dans laquelle ladite interface (60) est retenue de manière orientée à l'intérieur de ladite pièce terminale (14) par ledit cavalier (40), au moins une partie dudit cavalier (40) étant configurée de sorte à pouvoir être manipulé pour passer de la position de travail à la position de service, et ledit ensemble comportant au moins un premier ergot situé sur l'un des éléments parmi ledit cavalier (40) et ladite interface (60), et au moins un logement, situé sur l'autre élément, le ou lesdits premiers ergots étant aptes à venir se loger dans le ou lesdits logements en position de service.

7. Dispositif selon la revendication 1, dans lequel l'adaptateur (50) est lié au connecteur (20) pour être monté sur le bras (12) avec un degré de pivotement autour d'un premier axe de rotation (X), ledit adaptateur (50) étant configuré pour être monté sur le bras (12) selon une direction (Y'), dite de montage/démontage, située dans un plan perpendiculaire audit premier axe de rotation (X), ladite pièce intermédiaire (30, 30') étant mobile en rotation autour d'un deuxième axe de rotation (Z), ledit deuxième axe (Z) appartenant à la pièce terminale (14) et étant parallèle au premier axe de rotation (X).

8. Dispositif selon la revendication précédente, dans lequel les moyens de maintien comprennent au moins un ergot (131') escamotable selon une direction, dite d'escamotage, ladite direction d'escamotage comprenant une composante parallèle audit premier axe de rotation (X).

9. Dispositif selon la revendication précédente, dans lequel le ou lesdits ergots (131') sont aptes à venir se loger en position nominale de blocage à l'intérieur d'une ou de lumières (11) réalisées dans le bras (12).

10. Dispositif selon l'une quelconque des revendications 8 ou 9, dans lequel lesdits moyens de verrouillage comprennent au moins une partie en saillie (3) venue de matière avec un corps de ladite pièce intermédiaire (30, 30'), la ou lesdites parties en saillie (3) définissant une butée apte à empêcher l'escamotage du ou desdits ergots (131') en position nominale de blocage.

11. Dispositif selon la revendication précédente, dans lequel le ou lesdits ergots (131') et/ou la ou lesdites lumières (11) sont configurés pour permettre l'escamotage du ou desdits ergots (131') en dehors de la ou desdites lumières (11).

12. Dispositif selon l'une des revendications 7 à 11, comprenant un ensemble muni de la pièce terminale (14) du bras d'entrainement, d'une interface de connexion (20) et de ladite pièce intermédiaire (30, 30'), dite levier, ledit ensemble étant apte à occuper une position de travail dans laquelle ladite interface (60) est libre par rapport à ladite pièce terminale (14) et une position dite de service dans laquelle ladite interface (60) est retenue de manière orientée à l'intérieur de ladite pièce terminale (14) par ledit levier (30, 30'), au moins une partie dudit levier (30, 30') étant configurée de sorte à pouvoir être manipulé pour passer de la position de travail à la position de service, et ledit ensemble comportant au moins un premier ergot situé sur l'un des éléments parmi ledit levier (30, 30') et ladite interface (60), et au moins un logement, situé sur l'autre élément, le ou lesdits premiers ergots étant aptes à venir se loger dans le ou lesdits logements en position de service, ledit levier (30, 30') étant apte à être manipulé en rotation pour passer de la position de travail à la position de service.

13. Système d'essuyage de pare-brise de véhicule comprenant un balai (16), un porte-balai (12) et un dispositif selon l'une quelconque des revendications précédentes permettant d'accrocher ledit balai (16) audit porte-balai (12).

## Patentansprüche

1. Vorrichtung zur Befestigung eines Wischerblatts (16) an einem Antriebsarm (12) eines Scheibenwischsystems (10), wobei die Vorrichtung ein Endstück (14) des Arms (12), einen Verbinder (20), der dazu bestimmt ist, am Wischerblatt (16) befestigt zu werden, einen Adapter (50) zum Anschließen des Verbinders (20) an dem Arm (12) und ein Zwischenstück (40, 30, 30') umfasst, wobei der Adapter (50) Mittel zum Halten in einer Nennblockierstellung auf dem Arm umfasst, wobei das Zwischenstück (40, 30, 30') in dem Endstück (14) in Bezug auf den Adapter (50) beweglich ist, **dadurch gekennzeichnet, dass** das Zwischenstück Mittel zum Lösen und/oder Verriegeln der Haltemittel umfasst, so dass eine Montage und/oder eine Demontage des Adapters (50) auf dem Arm (12) zugelassen wird und/oder der Adapter (50) auf dem Arm (12) in der Nennblockierstellung zurückgehalten wird, wobei die Lösemittel so ausgestaltet sind, dass sie auf die Haltemittel so einwirken, dass sie bei der Montage und/oder Demontage des Adapters (50) auf dem Arm (12) eingezogen werden.

2. Vorrichtung nach dem vorhergehenden Anspruch, bei welcher der Adapter (50) mit dem Verbinder (20) mit einem Freiheitsgrad zum Schwenken um eine erste Rotationsachse (X) verbunden ist und das Zwischenstück (40) in dem Arm (12) entlang einer Richtung (Y), Montage-/Demontagerichtung genannt, die in einer senkrecht zu der Rotationsachse (X) verlaufenden Ebene liegt, translatorisch beweglich ist.

3. Vorrichtung nach einem der vorhergehenden Ansprüche, bei der die Haltemittel mindestens einen entlang einer Richtung, Einziehrichtung genannt, einziehbaren Anschlag (133) umfassen, wobei die Einziehrichtung eine parallel zu der ersten Rotationsachse (X) verlaufende Komponente umfasst, wobei die Lösemittel mindestens einen Nocken (42) umfassen, der auf den oder die Anschläge (133) so einwirkt, dass er sie in die Einziehrichtung antreibt.

4. Vorrichtung nach dem vorhergehenden Anspruch, bei der die Haltemittel Nasen (131) umfassen, die geeignet sind, in der Nennblockierstellung im Innern eines oder mehrerer Schlitze (114) aufgenommen zu werden, die in dem Arm (12) ausgeführt sind, wobei der oder die Nocken (42) auf den oder die Anschläge (133) so einwirken, dass die Nase oder die Nasen (131) aus dem oder den Schlitzen (114) des Arms (12) austreten.

5. Vorrichtung nach dem vorhergehenden Anspruch, bei welcher der oder die Anschläge (133) und die Nase oder die Nasen auf einem Lappen (32) gelegen, der aus einem Stück mit dem Adapter (50) ist.

6. Vorrichtung nach einem der vorhergehenden Ansprüche, umfassend eine Anordnung, die mit dem Endstück (14) des Antriebsarms, einer Verbindungsschnittstelle (60) und dem Zwischenstück (40), Reiter genannt, versehen ist, wobei die Anordnung geeignet ist, eine Arbeitsstellung einzunehmen, in der die Schnittstelle (60) in Bezug auf das Endstück (14) frei ist, und eine sogenannte Servicestellung, in der die Schnittstelle (60) zum Inneren des Endstücks (14) gerichtet von dem Reiter (40) zurückgehalten wird, wobei mindestens ein Teil des Reiters (40) so ausgestaltet ist, dass er betätigt werden kann, um aus der Arbeitsstellung in die Servicestellung überzugehen, und wobei die Anordnung mindestens eine erste Nase aufweist, die auf dem einem der Elemente unter dem Reiter (40) und der Schnittstelle (60) gelegen ist, und mindestens eine Aufnahme, die auf dem anderen Element gelegen ist, wobei die erste Nase oder die ersten Nasen geeignet sind, in der Servicestellung in der oder den Aufnahmen aufgenommen zu werden.

7. Vorrichtung nach Anspruch 1, bei welcher der Adapter (50) mit dem Verbinder (20) verbunden ist, um an dem Arm (12) mit einem Schwenkgrad um eine erste Rotationsachse (X) montiert zu werden, wobei der Adapter (50) dazu ausgestaltet ist, an dem Arm (12) entlang einer Richtung (Y'), Montage-/Demontagerichtung genannt, montiert zu werden, die in einer senkrecht zu der ersten Rotationsachse (X) verlaufenden Ebene gelegen ist, wobei das Zwischenstück (30, 30') um eine zweite Rotationsachse (Z) drehbeweglich ist, wobei die zweite Achse (Z) zu dem Endstück (14) gehört und parallel zu der ersten Rotationsachse (X) verläuft.

8. Vorrichtung nach dem vorhergehenden Anspruch, bei der die Haltemittel mindestens eine Nase (131') umfassen, die entlang einer Richtung, Einziehrichtung genannt, einziehbar ist, wobei die Einziehrichtung eine parallel zu der ersten Rotationsachse (X) verlaufende Komponente umfasst.

9. Vorrichtung nach dem vorhergehenden Anspruch, bei welcher die Nase oder die Nasen (131') geeignet sind, in der Nennblockierstellung im Innern eines oder mehrerer Schlitze (11) aufgenommen zu werden, die im Arm (12) ausgeführt sind.

10. Vorrichtung nach einem der Ansprüche 8 oder 9, bei der die Verriegelungsmittel mindestens einen vorspringenden Teil (3) umfassen, der aus einem Stück mit einem Körper des Zwischenstücks (30, 30') ist, wobei der oder die vorspringenden Teile (3) einen Anschlag definieren, der geeignet ist, in der Nennblockierstellung das Einziehen der Nase oder der Nasen (131') zu verhindern.

11. Vorrichtung nach dem vorhergehenden Anspruch, bei der die Nase oder die Nasen (131') und/oder der oder die Schlitze (11) dazu ausgestaltet sind, das Einziehen der Nase oder der Nasen (131') aus dem oder den Schlitzen (11) heraus zu ermöglichen.

12. Vorrichtung nach einem der Ansprüche 7 bis 11, umfassend eine Anordnung, die mit dem Endstück (14) des Antriebsarms, einer Verbindungsschnittstelle (20) und dem Zwischenstück (30, 30'), Hebel genannt, versehen ist, wobei die Anordnung geeignet ist, eine Arbeitsstellung einzunehmen, in der die Schnittstelle (60) in Bezug auf das Endstück (14) frei ist, und eine sogenannte Servicestellung, in der die Schnittstelle (60) zum Inneren des Endstücks (14) gerichtet von dem Hebel (30, 30') zurückgehalten wird, wobei mindestens ein Teil des Hebels (30, 30') so ausgestaltet ist, dass er betätigt werden kann, um aus der Arbeitsstellung in die Servicestellung überzugehen, und wobei die Anordnung mindestens einen erste Nase umfasst, der auf dem einem der Elemente unter dem Hebel (30, 30') und der Schnittstelle (60) gelegen ist, und mindestens eine Aufnahme, die auf dem anderen Element gelegen ist, wobei die erste Nase oder die ersten Nasen geeignet sind, in der Servicestellung in der oder den Aufnahmen aufgenommen zu werden, wobei der Hebel (30, 30') geeignet ist, drehbetätigt zu werden, um aus der Arbeitsstellung in die Servicestellung überzugehen.

13. Windschutzscheibenwischsystem für ein Kraftfahrzeugs, umfassend ein Wischerblatt (16), einen Wischerblattträger (12) und eine Vorrichtung nach einem der vorhergehenden Ansprüche, die das Ankuppeln des Wischerblatts (16) an den Wischerblattträger (12) ermöglicht.

## Claims

1. Device for fixing a windscreen wiper (16) onto a drive arm (12) of a wiping system (10), said device comprising a terminal part (14) of an arm (12), a connector (20) intended to be fixed to the wiper (16), a coupling adapter (50) for coupling the connector (20) to said arm (12), and an intermediate part (40, 30, 30'), said adapter (50) comprising means for holding it onto the arm in a nominal immobilizing position, said intermediate part (40, 30, 30') being mobile in said terminal part (14) relative to the adapter (50), **characterized in that** the intermediate part (40, 30, 30') comprises means for releasing and/or locking said holding means, so as to allow the adapter (50) to be mounted on and/or removed from the arm (12) and/or so as to retain the adapter (50) on the arm (12) in the nominal immobilizing position, in which the releasing means are configured to act on the holding means so as to retract them when the adapter (50) is mounted on and/or removed from the arm (12).

2. Device according to the preceding claim, in which said adapter (50) is linked to the connector (20) with a degree of pivoting freedom about a first axis of rotation (X) and said intermediate part (40) is translationally mobile in the arm (12) in a direction (Y), called direction of mounting/removal, situated in a plane at right angles to the axis of rotation (X).

3. Device according to any one of the preceding claims, in which the holding means comprise at least one abutment (133) that can be retracted in a direction, called direction of retraction, said direction of retraction comprising a component parallel to said first axis of rotation (X), the releasing means comprising at least one cam (42) acting on the abutment or abutments (133) so as to drive it/them in said direction of retraction.

4. Device according to the preceding claim, in which the holding means comprise snugs (131) suitable for being housed in a nominal immobilizing position inside one opening or openings (114) produced in the arm (12), the cam or cams (42) acting on the abutment or abutments (133) so as to extract the snug or snugs (131) from the opening or openings (114) of the arm (12).

5. Device according to the preceding claim, in which the abutment or abutments (133) and the snug or snugs is/are situated on a tab (32) made of the same material as the adapter (50).

6. Device according to any one of the preceding claims, comprising an assembly provided with the terminal part (14) of the drive arm, a connection interface (60) and said intermediate part (40), called clamp, said assembly being suitable for occupying a working position in which said interface (60) is free relative to said terminal part (14) and a so-called service position in which said interface (60) is retained in an oriented manner inside said terminal part (14) by said clamp (40), at least a part of said clamp (40) being configured to be able to be manipulated to pass from the working position to the service position, and said assembly comprising at least one first snug situated on one of the elements out of said clamp (40) and said interface (60), and at least one recess, situated on the other element, the first snug or snugs being suitable for being housed in said recess or recesses in the service position.

7. Device according to Claim 1, in which the adapter (50) is linked to the connector (20) to be mounted on the arm (12) with a degree of pivoting about a first axis of rotation (X), said adapter (50) being configured to be mounted on the arm (12) in a direction (Y'), called direction of mounting/release, situated in a plane at right angles to said first axis of rotation (X), said intermediate part (30, 30') being rotationally mobile about a second axis of rotation (Z), said second axis (Z) belonging to the terminal part (14) and being parallel to the first axis of rotation (X) .

8. Device according to the preceding claim, in which the holding means comprise at least one snug (131') that can be retracted in a direction, called direction of retraction, said direction of retraction comprising a component parallel to said first axis of rotation (X).

9. Device according to the preceding claim, in which said snug or snugs (131') is/are suitable for being housed in a nominal immobilizing position inside one opening or openings (11) produced in the arm (12).

10. Device according to either one of Claims 8 and 9, in which said locking means comprise at least one protruding part (3) made of the same material as a body of said intermediate part (30, 30'), said protruding part or parts (3) defining an abutment suitable for preventing the retraction of said snug or snugs (131') into the nominal immobilizing position.

11. Device according to the preceding claim, in which said snug or snugs (131') and/or said opening or openings (11) is/are configured to allow the retraction of said snug or snugs (131') out of said opening or openings (11).

12. Device according to one of Claims 7 to 11, comprising an assembly provided with the terminal part (14) of the drive arm, a connection interface (20) and said intermediate part (30, 30'), called lever, said assembly being suitable for occupying a working position in which said interface (60) is free relative to said terminal part (14) and a so-called service position in which said interface (60) is retained in an oriented manner inside said terminal part (14) by said lever (30, 30'), at least a part of said lever (30, 30') being configured so as to be able to be manipulated to pass from the working position to the service position, and said assembly comprising at least one first snug situated on one of the elements out of said lever (30, 30') and said interface (60), and at least one recess situated on the other element, said first snug or snugs being suitable for being housed in said recess or recesses in the service position, said lever (30, 30') being suitable for being manipulated rotationally to pass from the working position to the service position.

13. Vehicle windscreen wiping system comprising a wiper (16), a wiper holder (12) and a device according to any one of the preceding claims making it possible to attach said wiper (16) to said wiper holder (12)
